# EUROPEAN PATENT SPECIFICATION

(11) **EP 2 583 561 B1**
(45) Date of publication and mention of the grant of the patent: **27.03.2019**
(21) Application number: 11795890.0
(22) Date of filing: 12.05.2011
(51) Int. Cl.: A23G 1/36, A23G 1/38, A23G 1/30, A23G 3/40, C11C 3/10, A23D 9/04

(54) **FAT COMPOSITION FOR CHOCOLATE AND CONFECTIONERY**
FETTZUSAMMENSETZUNG FÜR SCHOKOLADE UND ANDERE SÜSSWAREN
COMPOSITION LIPIDIQUE UTILISÉE POUR LE CHOCOLAT ET LES CONFISERIES

(30) Priority: 16.06.2010 KR 20100057046
(43) Date of publication of application: 24.04.2013
(73) Proprietor: CJ Cheiljedang Corp., Jung-gu Seoul 100-749 (KR)
(72) Inventor: KIM, Mi Jung, Seongnam-si Gyeonggi-do 462-836 (KR); LEE, Sang Bum, Seoul 152-070 (KR); KIM, Yun Sik, Seoul 150-834 (KR); KANG, Ji Hyun, Seoul 157-773 (KR); LEE, Yun Jeong, Incheon 402-201 (KR); PARK, Seung Won, Giheung-gu, Yongin-si, Gyeonggi-do 446-727 (KR); KIM, Tai Joon, Seoul 137-070 (KR)
(74) Representative: Bosch Jehle Patentanwaltsgesellschaft mbH
(86) International application number: PCT/KR2011/003478
(87) International publication number: WO 2011/159024

(56) References cited:
- EP-A1- 2 508 077
- EP-A1- 2 508 078
- EP-A1- 2 561 763
- EP-A1- 2 561 765
- WO-A1-94/10326
- WO-A1-2009/031679
- GB-A- 1 431 781
- GB-A- 2 028 862
- JP-A- 2008 022 744
- JP-B2- 3 788 095
- KR-A- 967 002 732
- KR-B1- 0 140 696
- KR-B1- 100 354 206
- KR-B1- 100 693 150
- KR-B1- 910 005 258
- US-A- 5 069 915

## Description

### [Technical Field]

The present invention relates to a fat composition for chocolate and confectionery, and more particularly, to a fat composition for chocolate and confectionery having a POS/SOS content ratio in triglyceride of 7,04-11,10 and a POS content of 41,27wt% to 50,18 wt%, which is prepared by mixing vegetable fat with a fatty acid or fatty acid derivative to prepare a raw material fat and enzymatically transesterifying the raw material fat.

### [Background Art]

### 1. Cocoa butter

Chocolate generally contains 50% or less of sugar, 30 to 50% of cocoa mass, and about 30% of fat including milk fat. The content of cocoa butter among chocolate fat varies according to the kind of chocolate, but is generally about 60%.

Cocoa butter (cacao butter) is fat obtained from the seed (cacao bean, fat content: 48 to 49%) of theobroma cacao fruit. Cocoa butter consists of 98% of triglyceride, 1% of free fatty acid, 0.5% of monoglyceride or diglyceride, 0.2% of sterol, and 150 to 250 ppm of tocopherol. Triglyceride of cocoa butter has a structure which is 75% or more symmetrical and in which oleic acid is located at the sn-2 position and palmitic acid and stearic acid are located at the sn-1 and sn-3 positions, respectively. Cocoa butter includes 34 to 49% of POS, 23 to 30% of SOS, and 13 to 17% of POP, which mainly form a symmetrical structure.

Cocoa butter has a melting point of 32 to 35°C and a solid fat content (SFC) of 71 to 88% at room temperature (about 20°C), starts melting at 30 to 32°C, and substantially melts at 32 to 35°C. Since cocoa butter rapidly melts at around 30°C, cocoa butter is solid at room temperature, whereas it quickly melts in the mouth and thus provides a refreshing and clean mouth-feel. It is known that such melting characteristics of cocoa butter are due to the symmetric structure.

### 2. Replacement fats for cocoa butter

Since cocoa butter is obtained from a natural plant, supply thereof changes according to weather conditions. Further, since cocoa butter is expensive, vegetable fat and oil are used for chocolate as a substitute for cocoa butter. Such substitute fats include hardened palm kernel oil and coconut oil, which are not compatible with cocoa butter. Substitute fat and oil for cocoa butter is classified into a cocoa butter equivalent and extender (CBE), a cocoa butter replacement (CBR), and a cocoa butter substitute (CBS) depending on production methods and constituents.

The CBE is compatible with cocoa butter, has a similar triglyceride composition to cocoa butter, and requires tempering. Examples of the CBE include a palm middle fraction (PMF), Sal fat, Borneo tallow, Kokum, Shea butter, and fat fractions thereof. It is known that cocoa butter is mixed with a palm middle fraction and fat having a high SOS content to prepare fat similar to cocoa butter.

The CBR is solidified fat obtained by hardening soybean oil, canola oil, palm oil, or the like in a liquid state or in a liquid and solid mixed state at room temperature. The CBR can replace cocoa butter to a certain extent and does not require tempering. The CBR has a steep slope of an SFC curve and high oxidation stability due to increase in melting point and SFC. However, since the CBR is prepared using part hardening, it has a high content of trans acid and thus is nutritionally deficient.

The CBS is obtained by hardening some of vegetable oil and fat, is not compatible with cocoa butter, has a high content of lauric acid, and does not require tempering. The CBS is commonly used for coating in the baking field and is generally prepared by hardening or transesterifying palm kernel oil and coconut oil and, as necessary, mixing with other types of hardened vegetable oil. However, in the presence of moisture, fat and oil having a high content of lauric acid are hydrolyzed due to mold, emit abnormal odor, and are nutritionally deficient due to lauric acid.

Since CBR and CBS are nutritionally deficient and exhibit decreased functions associated with texture, e.g., they quickly melt in the mouth, CBE is increasingly used. CBE is mostly prepared by mixing SOS rich fat synthesized via enzymatic esterification with a palm mid-fraction (PMF) obtained by fractionation of palm oil at about 1:1. A CBE generally has a triglyceride composition consisting of 30 to 35% of POP, 10 to 15% of POS, and 30 to 35% of SOS, which has a higher content of POP and SOS and a lower content of POS than the triglyceride composition of Ghanaian cocoa butter (POP: 17%, POS: 43% SOS: 26%).

Physical properties of fat are identified through solid fat content (SFC) at different temperatures. SFC between 20 and 25°C denotes hardness of fat, SFC between 25 and 30°C denotes heat resistance, and SFC at 35°C or more denotes waxiness, which refers to an extent to which fat remains without quickly melting. Cocoa butter or cocoa butter replacement fat used for chocolate is considered to have good quality when their SFC is high at 30°C or less, sharply decreases at 30°C or more, and is very low at 35°C or more, i.e. when SFC forms a steep curve.

Comparing the SFC of cocoa butter with that of the CBE, the CBE having a high SOS content has a lower SFC at 30°C or less than the cocoa butter. However, the CBE having a high SOS content has a higher SFC at 30°C or more than cocoa butter, and thus has a solid feel and leaves a substantial aftertaste in the mouth. As described above, difference in SFC between the cocoa butter and the CBE, i.e. property difference, is due to difference in triglyceride composition between the cocoa butter and the CBE. The CBE has a high content of POP and SOS, whereas the cocoa butter has a high POS content. POS and POP have melting points around 35°C, while SOS has a melting point of 41°C. Fat having a high SOS content is relatively hard at 30°C or more (Aleksandra Torbica et al., Eur. Food Res Technol., 2006, 222:385-391).

Recently, there is a trend toward chocolate which is soft rather than hard and is neat without leaving an aftertaste by quickly melting in the mouth. Accordingly, a soft CBE which has decreased SOS content and increased PMF content has been developed. The soft CBE has a triglyceride composition including 40 to 45% of POP, 10 to 15% of POS, and 30 to 35% of SOS. The soft CBE has a low SFC overall in a temperature range of 20 to 35°C, and thus it can provide soft-texture chocolate but does not form solid crystals at room temperature, which may cause a blooming phenomenon.

The blooming phenomenon is caused by unstable crystals of fat, which is affected by factors such as insufficient tempering or variation in temperature during distribution and storage.

Most currently available CBEs have hard or soft properties by adjusting a mixed ratio between SOS obtained through synthesis or fractionation and PMF having a high POP content. However, the CBEs do not exhibit an SFC curve having a steep slope, unlike natural cocoa butter.

US Patent No. 4,705,692 discloses a substitute composition for cocoa butter which includes SOS, POS, and POP and has a high SOS content, in which the ratio of stearic acid to palmitic acid is 1.5:1 to 6.0:1.

JP Patent Publication No. 1999-243982 discloses fat having a triglyceride composition with a high POS content, produced by transesterification, wherein POS content is low, 18 wt% or less, whereas POP content is high, 10 to 55 wt%, and SOS content is high, 10 to 50 wt%. In this respect, the process focuses on synthesizing SOS rather than POS.

JP Patent Publication No. 2008-154555 discloses fat and oil for chocolate having proper heat resistance and meltability in the mouth, wherein the fat and oil have an SOS content of 40 to 60 wt%, a POP content of 1 to 10 wt%, and a weight ratio of SOS content/the sum of POS and SOA contents of 1.1 to 1.8, and the SOS content is greater than the sum of the POS and SOA contents. Thus, the fat and oil includes a high SOS content.

These conventional methods focus on fat and oil for chocolate having a high SOS content in order to produce chocolate products which are soft and quickly melt in the mouth and thus do not leave an aftertaste, whereas they do not put emphasis on POS abundant in natural cocoa butter.

Thus, the present inventors have conducted extensive studies to develop a fat composition that has an SFC curve similar to that of natural cocoa butter, exhibits melt properties or texture similar to natural cocoa butter, and exhibits improved qualities and high nutritional value. As a result, the present invention has been completed. WO94/10326 discloses fat and oil compositions having POS contents of 53,1wt%; 55wt% and POS/SOS ratios of 4,21 and 4,21; 4,23. US5069915 discloses fat compositions for chocolate having 32,wt% POS and a POS/ SOS ratio of 4,12. GB2028862 discloses cacao butter substitutes having 47, 55wt % POS and a POS/SOS ratio of 2. JP2008/022744 discloses fat compositions for chocolate comprising 44,6wt% POS and 2.07 POS/SOS ratio. JP3788095 discloses fat compositions for chocolate comprising 47,8; 47,7wt% POS and a POS/SOS ratio of 2,2; 2,86 WO2009/031679 discloses fat compositions having 44,6wt% POS and a POS/SOS ratio of 2,44.

### [Disclosure]

### [Technical Problem]

The present invention is directed to solving problems in that a conventional CBE feels slightly solid and leaves substantial aftertaste in the mouth and a conventional soft CBE causes a blooming phenomenon at room temperature, and is aimed at providing a fat composition for chocolate and confectionery which pleasantly melts in the mouth like natural cocoa butter, provides soft texture, and exhibits improved blooming resistance.

The present invention is also aimed at providing a fat composition having excellent texture, quality, functional properties or preservative properties to improve or maintain the quality of chocolate or confectionery when used for chocolate or confectionery instead of natural cocoa butter.

### [Technical Solution]

In accordance with an aspect of the present invention, there is provided a fat composition having a POS/SOS weight ratio in triglyceride of 7,04-11,10 and a POS content of 41,27wt% to 50,18 wt% based on the total triglyceride weight of the composition.

The fat composition may be prepared by mixing vegetable fat with a fatty acid or fatty acid derivative to prepare a raw material fat and enzymatically transesterifying the raw material fat.

The present invention is accomplished by preparing a fat composition having a controlled POS/SOS content ratio through enzymatic transesterification of vegetable fat and confirming that the fat composition has a composition similar to that of natural cocoa butter through analysis of a triglyceride structure and solid fat content of the fat composition, and furthermore, producing chocolate using the fat composition instead of cocoa butter, evaluating texture, mouth feel, flavor release, total feeling, and blooming resistance of the chocolate, and evaluating the obtained results through comparison with the properties of natural cocoa butter and conventional CBEs.

### [Advantageous Effects]

As described above, a fat composition according to the present invention has an SFC curve with a steep slope specific to cocoa butter due to a high POS content similar to the triglyceride composition of natural cocoa butter. Thus, the fat composition pleasantly melts in the mouth and may be used as a cocoa butter equivalent having soft texture. Also, the fat composition advantageously exhibits superior blooming resistance as compared with conventional replacement fats for cocoa butter since it has a triglyceride composition having a POS content similar to that of cocoa butter.

### [Description of Drawings]

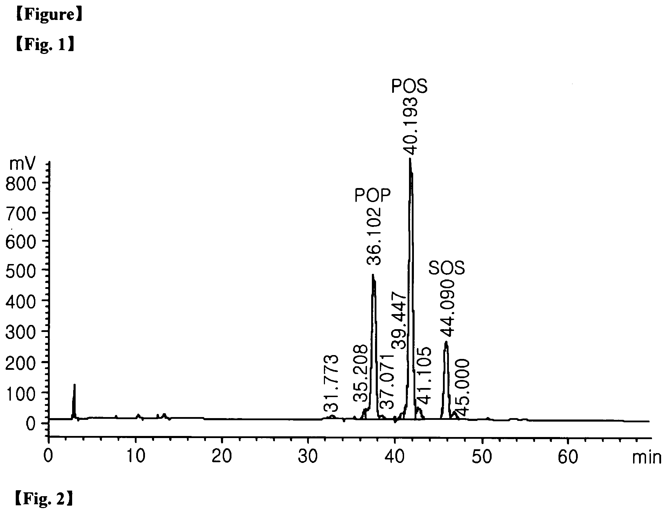

Fig. 1 is a high-performance liquid chromatography (HPLC) graph depicting a triglyceride composition of a fat composition according to the present invention; and
Fig. 2 is a graph depicting SFC of the fat composition according to the present invention and SFC of a general CBE.

### [Best Mode]

The present invention provides a fat composition for chocolate or confectionery having a triglyceride composition having a POS/SOS content ratio of 7,04-11,10 and a POS content of 41,27wt% to 50,18 wt%, which is prepared by mixing vegetable fat with a fatty acid or fatty acid derivative to prepare a raw material fat, and enzymatically transesterifying the raw material fat.

Herein, the term "POP" refers to triglyceride in which oleic acid is located at the sn-2 position and palmitic acids are located at the sn-1 and sn-3 positions.

The term "POS" refers to triglyceride in which oleic acid is located at the sn-2 position and palmitic acid and stearic acid or stearic acid and palmitic acid are located at the sn-1 and sn-3 positions, respectively.

The term "SOS" refers to triglyceride in which oleic acid is located at the sn-2 position and stearic acids are located at the sn-1 and sn-3 positions.

Unless defined otherwise, the units "%" and "part" denote "% by weight (wt%)" and "parts by weight," respectively.

In the present invention, the vegetable fat or oil may include any vegetable fat or oil generally used in the art. Examples of the vegetable fat or oil may include coconut oil, palm kernel oil, palm oil, canola oil, sun flower oil, soybean oil, cotton seed oil, rice kernel oil, corn oil, olive oil, shea fat, mango kernel fat, Borneo tallow (oil from Shorea stenoptera or Pentadema butyracea), Sal oil (Sherea robusta oil), kokum oil (Garcinia indica oil), and fractions thereof, without being limited thereto. Preferably, the vegetable fat or oil is at least one selected from the group consisting of palm kernel oil, palm oil, sun flower oil, fractions thereof, and combinations thereof.

In the present invention, a process of fractionating vegetable fat or oil serves to obtain a POP containing fat having content difference in saturated fatty acids and unsaturated fatty acids from vegetable fat or oil raw materials and may be conducted by a method selected from among dry fractionation and solvent fractionation depending on characteristics of the vegetable fat or oil raw materials. In solvent fractionation, any solvent, e.g., hexane, acetone, methyl ethyl ketone, ethanol, or the like, may be used so long as it can dissolve raw material fat.

In the present invention, examples of the fatty acid or fatty acid derivative may include palmitic acid ethyl ester, stearic acid ethyl ester, arachidonic acid ethyl ester, and behenic acid ethyl ester; and, as fatty acid derivatives thereof, palmitic acid methyl ester, stearic acid methyl ester, arachidonic acid methyl ester and behenic acid methyl ester; and combinations thereof. Any fatty acid and any fatty acid derivative generally used in the art may be used without limitation. Preferably, the fatty acid or fatty acid derivative is selected from the group consisting of stearic acid, stearic acid ethyl ester, stearic acid methyl ester, palmitic acid, palmitic acid ethyl ester and palmitic acid methyl ester, and combinations thereof.

The raw material fat may be a mixture of a vegetable fat or oil with a fatty acid derivative in a ratio of 1:0.5 to 1:10, preferably 1:1 to 1:5.

In the present invention, enzymatic transesterification may be used to produce symmetric triglyceride including saturated fatty acids in the sn-1,3 positions and unsaturated fatty acid in the sn-2 position and be conducted at 30 to 60°C for 1 to 30 hours using an sn-1,3 position-specific enzyme.

Examples of the sn-1,3 positions-specific enzyme may include enzymes extracted from Rhizopus delemar, Mucor miehei, Aspergillus miger, Rhizopus arrhizus, Rhizopus niveus, Mucor javanicus, Rhizopus javenicus, Rhizopus oxyzae, Thermomyces lanuginosus, or the like. Preferably, enzymes extracted from Mucor miehei or Thermomyces lanuginosus are used, without being limited thereto. Any enzyme specific to the sn-1 and 3 positions used in the art may be used.

The POS/SOS content ratio may be controlled by adjusting the ratio between substrates and reaction time in enzymatic transesterification.

Next, the present invention will be described in more detail with reference to the following examples. These examples are provided for illustrative purposes only and are not to be in any way construed as limiting the present invention.

### Example 1: Preparation of fat composition and analysis of structure of triglyceride

In Example 1, a fat composition was prepared as follows. A palm fraction was obtained as a raw material fat through solvent fractionation. 1 kg of palm oil was completely dissolved at 60°C and mixed with 10 kg of acetone. After the container was closed with a stopper, the mixture was stirred so that the oil was thoroughly dissolved in the acetone. The mixed solution was stirred at 0°C and 30 rpm for 3 hours and then crystallized, followed by vacuum filtration, thereby separating into palm stearin in a solid state and palm olein in a liquid state. Here, the palm olein had a yield of 60% or more and an iodine value of 60 or less.

The acetone-unremoved palm stearin obtained through fractionation was completely dissolved at 40°C and mixed with additional acetone. The mixture was stirred at 30°C and 30 rpm and then crystallized, followed by vacuum filtration, thereby being separated into a crystallized fraction and a palm middle fraction (PMF). Here, the PMF had a yield of 30% or more, and the palm fraction contained 55% of POP and had an iodine value of 40.

The palm fraction was mixed with a stearic acid ethyl ester at molar ratios of 1: 1, 1: 1.5, 1: 2, 1: 3, and 1: 5 such that the total weight was 2 kg, after which the mixture was subjected to transesterification using sn-1,3-specific lipase, lipozyme RMIM (immobilized sn-1,3-specific lipase from Rhizomucor miehei) for 16 to 20 hours, thereby synthesizing fat compositions. Then, ethyl ester present in the synthesized fat compositions was evaporated to produce final fat compositions.

The kinds and content of triglyceride in the fat compositions before/after enzymatic transesterification were identified using HPLC.

Analysis of triglyceride was conducted using HPLC under conditions listed in Table 1. The triglyceride structures of the fats before and after fractionation were analyzed using reverse-phase high-performance liquid chromatography and an evaporative light scattering detector (ELSD). 30 µl of a specimen and 10 ml of a solvent mixture of acetonitrile and dichloromethane at a ratio of 70: 30 were filtered using a PEFE syringe filter (25 mm, 0.2 µm) and then put in a 2 ml vial, and 20 µl of the specimen was injected using an autosampler. Acetonitrile and dichloromethane were used as a solvent A and a solvent B, respectively, and a flow rate was 1 ml/min. Solvent gradient elution (A:B, v:v) was performed at 70:30 for 25 minutes and a gradient solvent system was then used.

**TABLE 1**

| | |
|---|---|
| Equipment | Agilent, 1200 HPLC Chemstation |
| Column | Altima HP C18 HL (3.0 x 150mm) |
| Detector | Alltech, Evaporative Light Scattering Detector (ELSD) |
| Sample amount | 20 µl |
| Solvent | Acetonitrile: dichloromethane |
| | Gradient solvent system |
| Detector gain | 1 |
| Detector oven temperature | 45°C |
| Carrier gas | N₂ (1.5 L/min) |

The triglyceride composition of each fat was identified through HPLC, and results are illustrated in Table 2.

**TABLE 2**

| Substrate ratio (PMF: Stearic acid derivatives) | Reaction time | POS (wt%) | SOS (wt%) | POS/SOS (wt/wt) | fat composition |
|---|---|---|---|---|---|
| 1 : 5 | 16 H | 31.25 | 15.60 | 2.00 | A |
| 1 : 3 | 16 H | 35.22 | 11.62 | 3.03 | B |
| 1 : 2 | 16 H | 37.58 | 6.42 | 5.85 | C |
| 1 : 2 | 18 H | 41.27 | 5.86 | 7.04 | D |
| 1 : 1.5 | 20 H | 47.69 | 5.01 | 9.51 | E |
| 1 : 1 | 20 H | 50.18 | 4.52 | 11.10 | F |

Fat compositions A-C are not according to the invention. As can be seen from Table 2 above, Fat compositions A to F according to the present invention had a POS/SOS content ratio of 2 to 12 and a POS content of 30 to 55 wt%. In particular, Fat composition A had a POS content of 31.25%, an SOS content of 15.60% and a POS/SOS of 2.00. Also, Fat composition F had a POS/SOS content ratio of 11.10 and a POS content of 50.18%.

### Experimental Example 1: Analysis of SFC using nuclear magnetic resonance (NMR)

The three fat compositions (A, D, F) prepared in Example 1, and natural cocoa butter and common CBE having a high SOS content (40%) as comparative examples were analyzed as to solid fat content (SFC) using nuclear magnetic resonance (NMR). Fat composition A had a POS/SOS content ratio of 2.00 and a POS content of 31.25%, Fat composition D had a POS/SOS content ratio of 7.04 and a POS content of 41.27%, and Fat composition F had a POS/SOS content ratio of 11.1 and a POS content of 50.18%. SFC analysis was conducted using NMR under conditions as listed in Table 3.

An SFC analysis test using NMR was conducted by a parallel method. Five 3-ml samples were prepared and sufficiently melted at 80°C in pre-treatment, followed by cooling at 60°C for 10 minutes and then at 0°C for 90 minutes. Then, the crystals were stabilized at 26°C for 40 hours and then cooled at 0°C for 90 minutes. The samples were left for 30 minutes in a Celsius bath with a metal block thermostat preset to 10.0°C, 20.0°C, 25.0°C, 30.0°C, and 35.0°C, respectively, followed by SFC measurement. SFC was measured for about 6 seconds.

**TABLE 3**

| NMR equipment | BRUKER, minispec |
|---|---|
| Frequency | MHz |
| Sample amount | 13 ml |
| Pre-treatment temperature | 100 metal block thermostat, 0□ |
| Experiment temperature | 10.0□, 20.0□, 25.0□, 30.0□, 35.0□ |

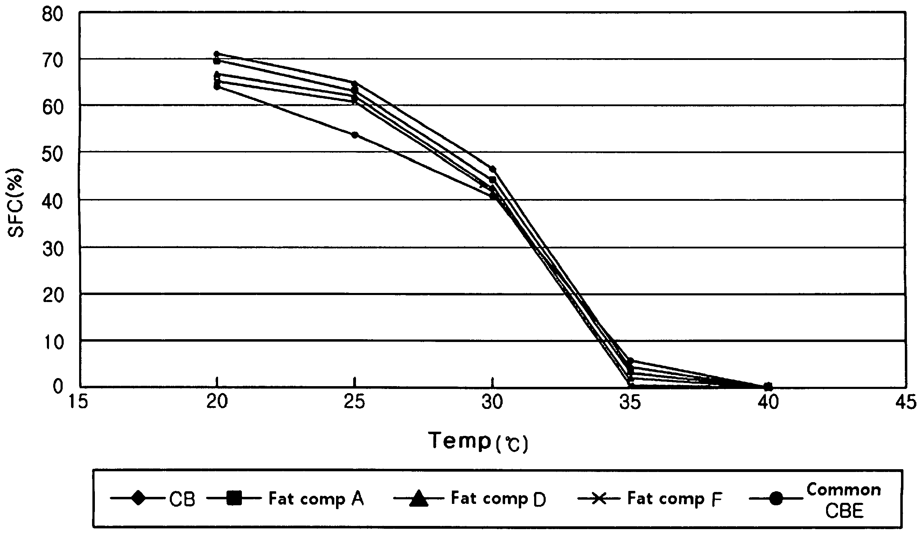

Analysis results of SFC using NMR are illustrated in Fig. 2. As shown in Fig. 2, Fat compositions A, D and F according to the present invention exhibited steep SFC slopes comparable to natural cocoa butter, and the common CBE having a high SOS content exhibited a relatively broad SFC slope. Also, as to residual solid fat content at 35□, the fat compositions of the present invention exhibited a residual solid fat content of 1% or less, comparable to natural cocoa butter, while the common CBE had a residual solid fat of 3%. That is, it could be seen that the fat compositions according to the present invention exhibited superior physical properties, for example, rapidly melted in the mouth, similar to natural cocoa butter, as compared with the common CBE.

### Example 3: Evaluation of functional properties of chocolate

In order to ascertain properties of chocolate containing the fat compositions of the present invention, chocolate containing the fat compositions A, D and F of the present invention, and chocolate containing natural cocoa butter and chocolate containing common CBE as comparative examples were prepared and evaluated.

### 3-1: Preparation of chocolate

As the fat compositions of the present invention, Fat compositions A, D and F were used. For comparison, common CBE having a higher SOS content than POS content and natural cocoa butter were prepared. Compositions of chocolates are listed in Table 4.

**TABLE 4**

| Raw materials | Chocolate 1 | Chocolate 2 | Chocolate 3 | Chocolate 4 | Chocolate 5 |
|---|---|---|---|---|---|
| Sugar (%) | 41.40 | 41.40 | 41.40 | 41.40 | 41.40 |
| Whole milk powder (%) | 15.00 | 15.00 | 15.00 | 15.00 | 15.00 |
| Skimmed milk powder (%) | 4.00 | 4.00 | 4.00 | 4.00 | 4.00 |
| Cocoa butter (%) | 19.50 | 19.50 | 19.50 | 19.50 | 24.50 |
| Fat composition A (%) | 5.00 | - | - | - | - |
| Fat composition D (%) | - | 5.00 | - | - | - |
| Fat composition F (%) | - | - | 5.00 | - | - |
| Common CBE (%) | - | - | - | 5.00 | - |
| Cocoa mass (%) | 14.50 | 14.50 | 14.50 | 14.50 | 14.50 |
| Lecithin (%) | 0.50 | 0.50 | 0.50 | 0.50 | 0.50 |
| Emulsifier (%) | 0.08 | 0.08 | 0.08 | 0.08 | 0.08 |
| Vanilla flavor (%) | 0.02 | 0.02 | 0.02 | 0.02 | 0.02 |

Chocolate 1 is not made with a fat composition according to the invention. Raw materials were mixed according to compositions listed in Table 4 and formed into fine particles using a ball mill at 60°C and 500 rpm for 2 hours, after which the mixture was cooled to 50°C, placed in a stainless container, and subjected to tempering. The tempered chocolate was put in a mold and cooled in a refrigerator at 10°C, thereby completing production of chocolate.

### 3-2: Evaluation of properties

The five chocolates prepared above were evaluated as to properties. Texture, mouth feel, flavor release, and total feeling are indicated from 1 to 10. Results of the evaluation are illustrated in Table 5.

**TABLE 5**

| | Texture | Mouth feel | Flavor release | Total feeling |
|---|---|---|---|---|
| Chocolate 1 | 7.2 | 8.0 | 7.8 | 8.0 |
| Chocolate 2 | 7.4 | 8.1 | 7.9 | 8.1 |
| Chocolate 3 | 7.1 | 7.9 | 7.8 | 7.8 |
| Chocolate 4 | 6.9 | 7.7 | 7.7 | 7.4 |
| Chocolate 5 | 7.1 | 8.0 | 7.9 | 8.0 |

Chocolate 1 is not made with a fat composition according to the invention. As a result of the evaluation, it could be seen that the chocolates (chocolates 1, 2, and 3) containing the fat compositions of the present invention obtained a higher grade than the chocolate 4 containing the common CBE and had a similar level to the chocolate 5 containing natural cocoa butter only in terms of texture, mouth feel, and flavor release. Thus, it could be seen that the fat compositions of the present invention can replace expensive natural cocoa butter.

Further, as to total feeling, the chocolates 1, 2, and 3 containing the fat compositions of the present invention obtained a higher grade than the common CBE having a high SOS content, thus proving that the fat compositions of the present invention having a high POS content exhibited excellent quality.

### 3-3: Evaluation of blooming resistance

The blooming resistance of five chocolates prepared above was evaluated. The chocolates were stored for several cycles in which each cycle included storage at 32 °C for 12 hours and at 20 °C for 12 hours, until blooming occurred. The number of cycles at which a blooming phenomenon first occurred is listed in Table 6 below.

**TABLE 6**

| | Number of cycles at which blooming first occurred |
|---|---|
| Chocolate 1 | 105 |
| Chocolate 2 | 96 |
| Chocolate 3 | 94 |
| Chocolate 4 | 85 |
| Chocolate 5 | 98 |

Chocolate 1 is not made with a fat composition according to the invention. It could be seen from the results of blooming resistance evaluation that chocolate containing the fat composition of the present invention exhibited similar or superior blooming resistance, as compared with chocolate of natural cocoa butter and a considerably superior blooming resistance, as compared with common CBE, thereby proving that the chocolate containing the fat composition according to the present invention exhibited excellent thermal stability.

## Claims

1. A fat composition for chocolate or confectionery having a 1(3)-palmitoyl-2-oleoyl-3(1)-stearoyl glycerol (POS)/1,3-Distearoyl-2-oleoyl glycerol (SOS) weight ratio in triglyceride of 7.04 to 11.10, a POS content of 41.27 wt% to 50.18 wt%, based on the total triglyceride weight of the composition.

2. The fat composition according to claim 1, wherein the fat composition is prepared by mixing vegetable fat with a fatty acid or fatty acid derivative to prepare a raw material fat and enzymatically transesterifying the raw material fat.

3. The fat composition according to claim 2, wherein the vegetable fat is selected from the group consisting of palm kernel oil, palm oil, sun flower oil, fractions thereof, and a combination thereof.

4. The fat composition according to claim 2 or 3, wherein the fatty acid or the fatty acid derivative is selected from the group consisting of fatty acids including palmitic acid and stearic acid, derivatives of the fatty acids including palmitic acid ethyl ester, stearic acid ethyl ester, palmitic acid methyl ester and stearic acid methyl ester, and combinations thereof.

5. A cocoa butter equivalent comprising the fat composition according to any one of claims 1 to 3.

6. A chocolate prepared using the fat composition according to any one of claims 1 to 3.

## Patentansprüche

1. Fettzusammensetzung für Schokolade oder Süßwaren, die ein 1(3)-Palmitoyl-2-Oleoyl-3(1)-Stearoyl Glycerol (POS)/1,3-Distearoyl-2-Oleoyl Glycerol (SOS) Gewichtsverhältnis in Triglycerid von 7,04 bis 11,10 hat, einen POS-Gehalt von 41,27 Gew.-% bis 50,18 Gew.-%, basierend auf dem Triglycerid-Gesamtgewicht der Zusammensetzung.

2. Fettzusammensetzung nach Anspruch 1, wobei die Fettzusammensetzung durch Mischen von Pflanzenfett mit einer Fettsäure oder einem Fettsäurederivat hergestellt wird, um ein Rohmaterialfett herzustellen, und durch enzymatisches Umestern des Rohmaterialfetts.

3. Fettzusammensetzung nach Anspruch 2, wobei das Pflanzenfett ausgewählt wird aus der Gruppe bestehend aus Palmkernöl, Palmöl, Sonnenblumenöl, Fraktionen davon und einer Kombination davon.

4. Fettzusammensetzung nach Anspruch 2 oder 3, wobei die Fettsäure oder das Fettsäurederivat ausgewählt wird aus der Gruppe bestehend aus Fettsäuren einschließlich Palmitinsäure und Stearinsäure, Derivaten der Fettsäuren einschließlich Palmitinsäure-Ethylester, Stearinsäure-Ethylester, Palmitinsäure-Methylester und Stearinsäure-Methylester und Kombinationen davon.

5. Kakaobutteräquivalent, das die Fettzusammensetzung nach einem der Ansprüche 1 bis 3 aufweist.

6. Schokolade, die unter Verwendung der Fettzusammensetzung nach einem der Ansprüche 1 bis 3 hergestellt ist.

## Revendications

1. Composition de matière grasse pour chocolat ou confiserie ayant un rapport pondéral de 1(3)-palmitoyl-2-oléoyl-3(1)-stéaroyl glycérol (POS)/1,3-distéaroyl-2-oléoyl glycérol (SOS) dans du triglycéride de 7,04 à 11,10, une teneur en POS de 41,27 % en poids à 50,18 % en poids, par rapport au poids total de triglycéride de la composition.

2. Composition de matière grasse selon la revendication 1, dans laquelle la composition de matière grasse est préparée par mélange de la matière grasse végétale avec un acide gras ou un dérivé d'acide gras pour préparer une matière grasse matière première et par transestérification par voie enzymatique de la matière grasse matière première.

3. Composition de matière grasse selon la revendication 2, dans laquelle la matière grasse végétale est choisie dans le groupe constitué par l'huile de palmiste, l'huile de palme, l'huile de tournesol, leurs fractions et une combinaison de celles-ci.

4. Composition de matière grasse selon la revendication 2 ou 3, dans laquelle l'acide gras ou le dérivé d'acide gras est choisi dans le groupe constitué par les acides gras comprenant l'acide palmitique et l'acide stéarique, les dérivés des acides gras comprenant l'ester éthylique d'acide palmitique, l'ester éthylique d'acide stéarique, l'ester méthylique d'acide palmitique et l'ester méthylique d'acide stéarique, et leurs combinaisons.

5. Équivalent du beurre de cacao comprenant la composition de matière grasse selon l'une quelconque des revendications 1 à 3.

6. Chocolat préparé en utilisant la composition de matière grasse selon l'une quelconque des revendications 1 à 3.
